# EUROPÄISCHE PATENTANMELDUNG

(11) **EP 0 521 462 A2**
(43) Veröffentlichungstag der Anmeldung: **07.01.1993**
(21) Anmeldenummer: 92111061.5
(22) Anmeldetag: 30.06.1992
(51) Int. Cl.: B29B 13/02

(54) **Verfahren zum Schmelzen von Thermoplasten**

(30) Priorität: 02.07.1991 DE 4121802
(71) Anmelder: HOECHST AKTIENGESELLSCHAFT, 65926 Frankfurt am Main (DE)
(72) Erfinder: Naumann, Joachim, W-6233 Kelkheim (Taunus) (DE); Schmelzer, Heinz, W-6531 Rümmelsheim (DE)

(57) **Zusammenfassung**

Die Erfindung betrifft ein Verfahren zum Schmelzen von Thermoplasten, bei dem man die Thermoplasten mit dem heißen Dampf einer perfluorierten organischen Verbindung in Berührung bringt, wobei der Dampf mindestens die Temperatur hat, die für das Schmelzen des eingesetzten Thermoplasten notwendig ist.

## Beschreibung

Thermoplaste oder thermoplastische Kunststoffe sind Kunststoffe, die oberhalb ihres Schmelzbereichs fließfähig sind. Sie werden z.B. als Klebstoffe oder Beschichtungen verwendet. Thermoplast-Klebstoffe sind z.B. EVA (Ethylenvinylacetat), PA (Polyamid), PI (Polyimid), Polyetherketon und SIS (Styrol-Isopren-Styrol), wie in Patrick: "Treatise on Adhesion and Adhesives" (1969) Vol. 2, Chapter 10: "Thermoplastic Adhesives" beschrieben.

Thermoplastische Klebstoffe, z.B. auf Ethylenvinylacetat- oder Polyetherketon-Basis, werden üblicherweise in einem heizbaren Gefäß geschmolzen, mit einem geeigneten Auftragsgerät, z.B. einer Walze oder Rakel, auf die zu verklebenden Teile aufgetragen und dann diese Teile zusammengefügt. Nach dem Abkühlen entsteht eine innige Verbindung zwischen den Teilen. Der Nachteil dieser Methode besteht darin, daß durch ungleichmäßige Wärmeverteilung lokale Überhitzungen entstehen können und daß durch Luftfeuchtigkeit die Verklebung behindert werden kann. Außerdem muß der Thermoplast in geschmolzener Form auf die miteinander zu verklebenden Teile aufgebracht werden.

Aus der US-PS 4 721 578 ist ein Verfahren zur Wärmeübertragung auf Werkstücke bekannt, welches auch das Schmelzen von Werkstücken umfaßt, bei dem diese mit dem heißen Dampf eines perfluorierten Hexafluorpropenoxid-Oligomeren der Formel 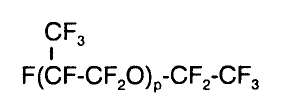
mit p = 1 - 9, in Kontakt gebracht werden. Eine Verklebung von Werkstücken mit Hilfe von Thermoplasten wird jedoch nicht erwähnt.

In den deutschen Patentanmeldungen P 40 02 107.6 und P 41 20 505.7 werden Verfahren zum Härten von heißhärtbaren Präpolymeren beschrieben, bei dem man die Präpolymeren mit einem Härter mischt und dann mit dem heißen Dampf eines Perfluorpolyethers der allgemeinen Formel 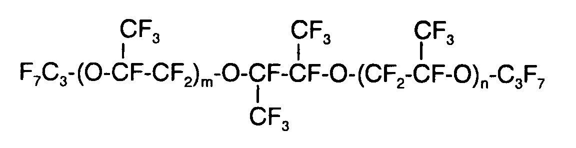
wobei m und n ganze Zahlen von 0 bis 3 sind, oder mit dem heißen Dampf einer anderen Perfluorverbindung in Berührung bringt, wobei der Dampf mindestens die Temperatur hat, die für die Härtung des eingesetzten Präpolymeren notwendig ist.

Gegenstand der vorliegenden Erfindung ist ein Verfahren zum Schmelzen von Thermoplasten, dadurch gekennzeichnet, daß man die Thermoplaste mit dem heißen Dampf einer perfluorierten organischen Verbindung in Berührung bringt, wobei der Dampf mindestens die Temperatur hat, die für das Schmelzen des eingesetzten Thermoplasten notwendig ist, wobei perfluorierte Verbindungen der Formel 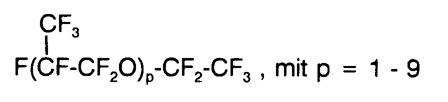
ausgenommen sind.

### Vorzugsweise werden folgende perfluorierte organische Verbindungen eingesetzt:

1. Geradkettige oder verzweigte Perfluoralkane mit 5 bis 20 C-Atomen, z.B. Perfluoroctan C₈F₁₈ mit einem Siedepunkt von 102°C, Perfluor-2,3,4-trimethylpentan C₈F₁₈ mit einem Siedepunkt von 115°C, Perfluor-2,4-dimethyl-3-ethylpentan C₉F₂₀ mit einem Siedepunkt von 121°C. Ihre Herstellung wird z.B. in DE-OS 2 332 097 und in EP-A-0 286 131 beschrieben.
2. Cyclische Perfluoralkane mit 10 bis 20 C-Atomen, die auch perfluorierte Alkylsubstituenten enthalten können, z.B. Perfluordekalin, Perfluorbutyldekalin, Perfluorperhydrophenanthren und Perfluorperhydrobenzanthren. Ihre Herstellung wird z.B. in DE-OS 2 000 830, US-PS 4 777 304, EP-A-0 253 529, EP-A-0 190 393 sowie in der Zeitschrift "Tetrahedron", 19 (1963), Seite 1893 ff. beschrieben.
3. Perfluorierte tertiäre Alkylamine, deren Perfluoralkylreste gleich oder verschieden sein können und 1 bis 14 C-Atome haben, wobei zwei der Reste durch O- oder N-Atome verbrückt sein können. Ihre Herstellung wird z.B. in US-PS 2 616 927, DE-OS 3 804 473 und in EP-A-0 271 272 beschrieben.
4. Perfluoraminoether mit der allgemeinen Formel 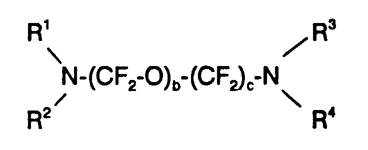 worin bedeuten:
   - R¹ bis R⁴: gleich oder voneinander verschieden eine Gruppe der Formel CₐF₂ₐ₊₁, wobei a eine ganze Zahl von 1 bis 14 ist,
   b, c gleich oder voneinander verschieden eine ganze Zahl von 1 bis 6.
   Die Herstellung solcher Perfluoraminoether ist z.B. in EP-A-0 214 852 beschrieben. Besonders geeignet sind die folgenden Perfluoraminoether: (C₂F₅)₂N-CF₂CF₂OCF₂CF₂-N(C₃F₇)₂ mit einem Siedebereich zwischen 195 und 200°C, (C₂F₅)₂N-CF₂CF₂OCF₂CF₂-N(C₄F₉)₂ mit einem Siedebereich zwischen 215 und 230°C, (C₃F₇)₂N-CF₂CF₂OCF₂CF₂-N(C₃F₇)₂ mit einem Siedebereich zwischen 225 und 240°C, (C₃F₇)₂N-(CF₂)₄O(CF₂)₄-N(C₃F₇)₂ mit einem Siedebereich zwischen 240 und 260°C und (C₃F₇)₂N-(CFO₂)₃O(CF₂)₃-N(C₃F₇)₂ mit einem Siedebereich zwischen 240 und 265°C.
5. Perfluorpolyether der Formel

   R⁵-O-(A)-(B)-(C)-R⁶ (1)

   worin bedeuten:
   - R⁵, R⁶: gleich oder voneinander verschieden C_{d}F_{2d+1}, wobei d eine ganze Zahl von 1 bis 4 ist,
   - (A),(B) und (C: ) verschieden voneinander eine Gruppe der Formel 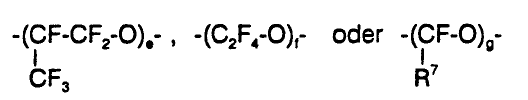
   mit
   R⁷ = F oder CF₃
   e eine ganze Zahl von 1 bis 7 und
   f, g gleich oder voneinander verschieden eine ganze
   Zahl von 0 bis 7 sind
   oder
6. Perfluorpolyether der Formel 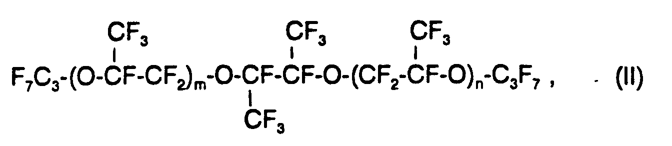 wobei m und n ganze Zahlen von 0 bis 3 sind.
   Die Herstellung von Perfluorpolyethern der Formeln I und II ist z.B. in US-PS 3 665 041, US-PS 3 985 810 und in JP-OS Sho 58-103 334 beschrieben.

Vorzugsweise arbeitet man mit dem Dampf einer siedenden Perfluorverbindung, deren Siedetemperatur mindestens den Wert hat, der für das Schmelzen des eingesetzten Thermoplasten notwendig ist. Die Siedetemperatur der ausgewählten Perfluorverbindung kann auch einen höheren Wert haben als für den Schmelzprozeß notwendig ist, jedoch bedeutet dies im allgemeinen einen überflüssigen Energieaufwand. Daher benutzt man in einer besonders bevorzugten Ausführungsform der Erfindung den Dampf derjenigen siedenden Perfluorverbindung, deren Siedetemperatur mindestens den für das Schmelzen notwendigen Wert hat und außerdem diesem notwendigen Wert am nächsten kommt, d.h. möglichst wenig über diesem liegt.

Das Schmelzen von Thermoplasten in der Dampfphase einer der genannten Perfluorverbindungen ist eine Art Reflow-Technik mit kontinuierlicher Wärmezufuhr (vgl. Lea and Johns, Brazing and Soldering, No. 12, Spring 1987, S. 34 - 39). Die latente Verdampfungswärme dieser Perfluorverbindungen wird verwendet, um Thermoplasten, vorzugsweise beim Siedepunkt der eingesetzten Perfluorverbindung, zu schmelzen.

Eine der wichtigsten Einsatzmöglichkeiten des erfindungsgemäßen Schmelzverfahrens ist das Verkleben von Teilen miteinander. Ausreichende Mengen des Thermoplasten werden in fester Form auf die miteinander zu verklebenden Teile aufgebracht. Anschließend werden die Teile in eine Zone mit heißem Dampf einer der genannten Perfluorverbindungen eingetaucht. Der Dampf kondensiert auf den relativ kalten Oberflächen der eingetauchten Teile. Dabei wird die Verdampfungswärme der Perfluorverbindung frei, der Thermoplast schmilzt und wird nach der Entfernung der Teile aus der Schmelzzone wieder fest. Wenn man dieses Verfahren mit einer siedenden Perfluorverbindung durchführt, ist die Dampftemperatur gleich der Siedetemperatur der gewählten Perfluorverbindung. Diejenigen der erfindungsgemäßen Perfluorverbindungen, die eine einheitliche molekulare Zusammensetzung besitzen, haben einen konstanten Siedepunkt und garantieren so eine präzise Temperaturkontrolle bei einem solchen Klebeprozeß. Die Dämpfe der Perfluorverbindungen verteilen sich schnell über die Flächen der zu verklebenden Bauteile, unabhängig von deren Konstruktion.

Ein weiterer Gegenstand der Erfindung ist demgemäß ein Verfahren zum Verkleben von Gegenständen mit Hilfe eines Thermoplasten, dadurch gekennzeichnet, daß man den Thermoplast in fester Form auf die zu verklebenden Gegenstände aufbringt und dann mit heißen Dampf einer perfluorierten organischen Verbindung in Berührung bringt, wobei der Dampf mindestens die Temperatur hat, die für das Schmelzen des eingesetzten Thermoplasten notwendig ist, wobei perfluorierte Verbindungen der Formel 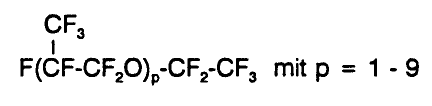
ausgenommen sind und dann den geschmolzenen Thermoplasten abkühlen und fest werden läßt.

Im Unterschied zum konventionellen Verfahren wird der Thermoplast in fester Form, z.B. als Folie, zwischen die zu verklebenden Teile gelegt und erst dann geschmolzen.

Dieses Dampfphase-Verfahren vollzieht sich in einer nahezu luftfreien Umgebung, so daß Luftfeuchtigkeit von den Klebstoffen nicht absorbiert werden kann. Luftfeuchtigkeit kann nämlich die vollständige Verklebung behindern. Ein weiterer Vorteil der Perfluorverbindungen besteht darin, daß sie - im Gegensatz zu vielen anderen organischen Flüssigkeiten - wegen ihres inerten Verhaltens weder Kunststoffe noch Metalle angreifen.

Sowohl nach dem Batch-Prinzip arbeitende Standgeräte als auch Continue-Inline-Anlagen sind einsetzbar, wie sie beim Dampfphase-Löten bekannt sind (Bucher, Elektronik 7/31.03.1988, S. 108 - 113; Merkblatt Hoechst AG "Hostinert", Ausgabe Oktober 1989). Bei dem diskontinuierlichen Batch-Verfahren wird oft außer einer der genannten Perfluorverbindungen (Primärmedium) eine obere Sperrschicht, bestehend aus dem Dampf einer Fluorverbindung (Sekundärmedium), z.B. Trichlortrifluorethan verwendet, wobei der Siedepunkt des Sekundärmediums deutlich unter dem des Primärmediums liegt, um dessen Verdunstung zu verhindern. Die kontinuierlich arbeitenden und transportierenden Inline-Anlagen können in einen total automatisierten Produktionsprozeß integriert werden und sind für einen größeren Leistungsausstoß gedacht. Eine Dampfphase aus einem Sekundärmedium ist bei diesen Anlagen nicht notwendig.

Nach dem beschriebenen Verfahren können auch thermoplastische Hochtemperatur-Schmelzklebstoffe, etwa auf Polyetherketonbasis (beispielsweise unter dem Handelsnamen ®Hostatec X 902 erhältlich) zum Schmelzen gebracht werden. Vielfach liegt jedoch die Schmelztemperatur dieser Schmelzklebstoffe oberhalb der Siedetemperatur der oben genannten Perfluorverbindungen. In einem solchen Fall muß die Siedetemperatur der betreffenden Perfluorverbindung durch Anwendung von Druck so erhöht werden, daß die Schmelztemperatur des Klebstoffes erreicht wird. Diese speziell für Hochtemperatur-Schmelzklebstoffe entwickelte Verfahrensvariante wird in einem Druckgefäß (Autoklaven) durchgeführt, i. allg. unter dem Eigendampfdruck der Perfluorverbindung, aber wenn nötig auch durch Überlagerung mit Inertgas. Schmelzklebstoffe dieser Art haben im allgemeinen eine sehr hohe Temperaturbeständigkeit.

### Beispiel 1

Es wurde der Hochtemperatur-Schmelzklebstoff ®Hostatec X 902 (Thermoplast auf Polyetherketonbasis in Pulverform) mit einem Schmelzpunkt von etwa 360 °C folgendermaßen zum Schmelzen gebracht: Als Wärmeüberträger in der Dampfphase wurde Perfluor-5,8,11,12,15,18-hexamethyl-4,7,10,13,16,19-hexaoxadocosan mit der Summenformel C₂₂F₄₆O₆ und der Strukturformel 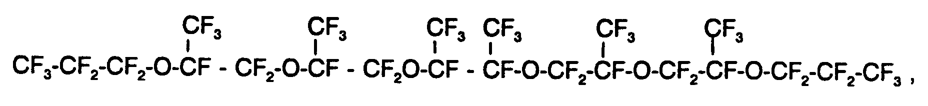
d.h. ein Perfluorpolyether der unter 6. angegebenen Formel mit m=n=2, verwendet. Da der Siedepunkt dieses Perfluorpolyethers bei 272 °C und damit unterhalb des Schmelzpunktes des Thermoplastpulvers lag, mußte der Versuch unter Druck durchgeführt werden. Ein Becherglas wurde mit 30 ml des Perfluorpolyethers gefüllt und in diese Flüssigkeit ein Reagenzglas mit dem pulverförmigen ®Hostatec X 902 bis fast zum oberen Rand des Reagenzglases eingetauscht. Alles zusammen wurde dann in einen Autoklaven mit einem Volumen von 0,5 l gestellt. Dieser wurde verschlossen und 10 Minuten lang in einem Trockenschrank auf 380 °C erhitzt. Im Autoklaven wurde in dieser Zeit ein Überdruck von mindestens 8 bar erreicht; anschließend wurde der Autoklav aus dem Trockenschrank herausgenommen. Nach dem Abkühlen des Autoklaven wurde dieser geöffnet und der Inhalt herausgenommen. Das Schmelzklebstoffpulver in dem Reagenzglas war zu einer festen, homogenen Masse geschmolzen. Damit wurde gezeigt, daß ein pulverförmiger Hochtemperaturklebstoff mit dem Dampf einer Perfluorverbindung, deren Siedepunkt unterhalb des Schmelzpunktes des Klebstoffpulvers liegt, durch Erhitzen unter Druck zum Schmelzen gebracht werden kann und Hostatec X 902 als Hochtemperatur-Schmelzklebstoff geeignet ist. Die eingesetzte Perfluorverbindung blieb bei diesem Versuch stabil; eine gaschromatographische Untersuchung vor und nach dem Versuch zeigte, daß sie sich nicht verändert hatte.

## Patentansprüche

1. Verfahren zum Schmelzen von Thermoplasten, dadurch gekennzeichnet, daß man die Thermoplaste mit dem heißen Dampf einer perfluorierten organischen Verbindung in Berührung bringt, wobei der Dampf mindestens die Temperatur hat, die für das Schmelzen des eingesetzten Thermoplasten notwendig ist, wobei perfluorierte Verbindungen der Formel 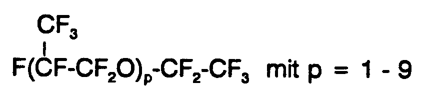 ausgenommen sind.

2. Verfahren zum Verkleben von Gegenständen mit Hilfe eines Thermoplasten, dadurch gekennzeichnet, daß man den Thermoplast in fester Form auf die zu verklebenden Gegenstände aufbringt und dann mit heißen Dampf einer perfluorierten organischen Verbindung in Berührung bringt, wobei der Dampf mindestens die Temperatur hat, die für das Schmelzen des eingesetzten Thermoplasten notwendig ist, wobei perfluorierte Verbindungen der Formel 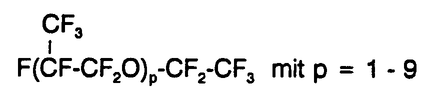 ausgenommen sind und dann den geschmolzenen Thermoplasten abkühlen und fest werden läßt.

3. Verfahren nach Anspruch 1 oder 2, dadurch gekennzeichnet, daß man mit dem Dampfeiner siedenden Perfluorverbindung arbeitet, deren Siedetemperatur mindestens den Wert hat, der für das Schmelzen des eingesetzten Thermoplasten notwendig ist.

4. Verfahren nach Anspruch 3, dadurch gekennzeichnet, daß man mit dem Dampf derjenigen Perfluorverbindung arbeitet, deren Siedetemperatur der für das Schmelzen des eingesetzten Thermoplasten notwendigen Temperatur am nächsten kommt.

5. Verfahren nach einem der Ansprüche 1 oder 2, dadurch gekennzeichnet, daß man mit dem Dampf einer siedenden Perfluorverbindung arbeitet, deren Siedetemperatur durch Anwendung von Druck mindestens auf den Wert erhöht werden kann, der für das Schmelzen des eingesetzten Thermoplasten notwendig ist.

6. Verfahren nach einem der Ansprüche 1 bis 5, dadurch gekennzeichnet, daß man als perfluorierte organische Verbindung ein geradkettiges oder verzweigtes Perfluoralkan mit 5 bis 20 C-Atomen einsetzt.

7. Verfahren nach einem der Ansprüche 1 bis 5, dadurch gekennzeichnet, daß man als perfluorierte organische Verbindung ein cyclisches Perfluoralkan mit 10 bis 20 C-Atomen einsetzt, das auch perfluorierte Alkylsubstituenten enthalten kann.

8. Verfahren nach einem der Ansprüche 1 bis 5, dadurch gekennzeichnet, daß man als perfluorierte Verbindung ein perfluoriertes testiäres Alkylamin einsetzt, dessen Perfluoralkylreste gleich oder verschieden sein können und 1 bis 14 C-Atome haben, wobei zwei der Reste durch O- oder N-Atome verbrückt sein können.

9. Verfahren nach einem der Ansprüche 1 bis 5, dadurch gekennzeichnet, daß man als perfluorierte organische Verbindung einen Perfluoraminoether der allgemeinen Formel 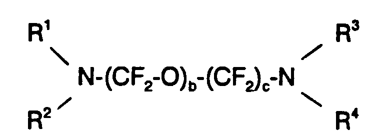 einsetzt, worin bedeuten:
R¹ bis R⁴ gleich oder voneinander verschieden eine Gruppe der Formel CₐF₂ₐ₊₁, wobei a eine ganze Zahl von 1 bis 14 ist,
b, c gleich oder voneinander verschieden eine ganze Zahl von 1 bis 6.

10. Verfahren nach einem der Ansprüche 1 bis 5, dadurch gekennzeichnet, daß man als perfluorierte organische Verbindung einen Perfluorpolyether der Formel
R⁵-O-(A)-(B)-(C)-R⁶
einsetzt, worin bedeuten:
R⁵, R⁶ gleich oder voneinander verschieden C_{d}F_{2d+1}, wobei d eine ganze Zahl von 1 bis 4 ist,
(A), (B) und (C) verschieden voneinander eine Gruppe der Formel 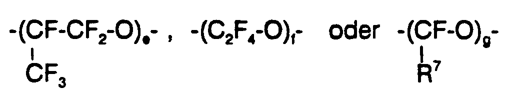
mit
R⁷ = F oder CF₃,
e eine ganze Zahl von 1 bis 7 und
f, g gleich oder voneinander verschieden eine ganze Zahl von 0 bis 7 sind.

11. Verfahren nach einem der Ansprüche 1 bis 5, dadurch gekennzeichnet, daß man als perfluorierte organische Verbindung einen Perfluorpolyether der Formel 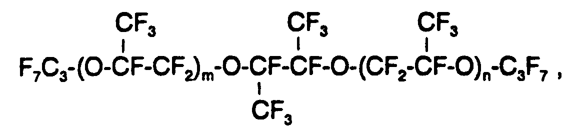 wobei m und n ganze Zahlen von 0 bis 3 sind,
einsetzt.
